# EUROPÄISCHE PATENTANMELDUNG

(11) **EP 3 138 668 A1**
(43) Veröffentlichungstag der Anmeldung: **08.03.2017**
(21) Anmeldenummer: 16175411.4
(22) Anmeldetag: 21.06.2016
(51) Int. Cl.: B25J 15/00, B25J 15/04, B25J 15/12

(54) **INNENGREIFER**

(30) Priorität: 01.09.2015 DE 102015114582
(71) Anmelder: Röhm GmbH, 89567 Sontheim (DE)
(72) Erfinder: Schweigert, Eduard, 89428 Syrgenstein (DE); Gräßle, Jens, 89522 Heidenheim (DE)
(74) Vertreter: Hentrich Patentanwälte PartG mbB

(57) **Zusammenfassung**

Die Erfindung betrifft einen Innengreifer (1) mit einem Betätigungsmittel (2), das zumindest zwischen einer Spannstellung und einer Lösestellung verstellbar ist und dem ein axial verstellbarer Spannkonus (3) zugeordnet ist, der in ein mit einer Halteplatte (4) einteilig ausgebildetes sowie mit einem Werkzeug und/oder einem Werkstück wechselwirkendes Spannelement (5) eingreift.

## Beschreibung

Die Erfindung betrifft einen Innengreifer zum Ergreifen einer Innenkontur eines Werkzeugs, eines Werkstücks oder dergleichen. Innengreifer werden in der Handhabungstechnik verwendet, wobei diesen meist Positioniersysteme zugeordnet sind und insbesondere bei so genannten Pick-and-Place-Anwendungen zum Einsatz kommen. Weiterhin finden sie Verwendung an Robotern.

Die aus dem Stand der Technik bekannten Innengreifer sind meist aufwendig aus einer Vielzahl von einzelnen Bauteilen gebildet. Sollen nun hohe Stückzahlen an solchen Greifern hergestellt werden, so unterliegen diese großen Durchlaufzeiten, was als nachteilig empfunden wird.

Ausgehend davon ist es Aufgabe der vorliegenden Erfindung, einen vereinfachten Innengreifer bereitzustellen.

Diese Aufgabe wird gelöst durch einen Innengreifer mit dem Merkmalsbestand des Patentanspruchs 1. Insbesondere weist dieser Innengreifer ein Betätigungsmittel auf, welches zumindest zwischen einer Spannstellung und einer Lösestellung verstellbar ist und welchem ein axial verstellbarer Spannkonus zugeordnet ist. Dieser Spannkonus greift in ein Spannelement ein, welches mit einem Werkzeug und/oder einem Werkstück wechselwirken kann und welches einteilig mit einer Halteplatte geformt ist. Zur Verstellung des Innengreifers dient also das Betätigungsmittel, welches insbesondere als Druckmittel betätigter Zylinder realisiert sein kann. Dadurch, dass die Halteplatte einteilig mit dem Spannelement gebildet ist, kann dieses in einem einzigen Fertigungsschritt hergestellt werden, um anschließend mit dem Betätigungsmittel verbunden zu werden.

Hierbei hat es sich als sinnvoll erwiesen, dass die Halteplatte mit dem Spannelement mittels eines generativen Fertigungsverfahren hergestellt wird. Dabei hat es sich insbesondere als vorteilhaft erwiesen, wenn ein Pulverbett-Verfahren, wie selektives Laserschmelzen (SLM) oder selektives Lasersintern (SLS) eingesetzt wird. Weiterhin kann auch die Halteplatte mit dem Spannelement in einem Freiraumverfahren hergestellt sein, wie beispielsweise durch ein Fused Deposition Modelling (Schmelzschichtung) oder einem Laminated Object Manufacturing (LOM), oder auch durch Kaltgasspritzen oder durch Elektronenstrahlschmelzen gefertigt werden. Weiterhin können auch Flüssigmaterialverfahren zur Herstellung der Halteplatte mit dem Spannelement eingesetzt werden, z.B. Stereolithografie (SLA), Digital Light Processing (DLP) oder Liquid Composite Molding (LCM).

Im Rahmen der Erfindung hat es sich als vorteilhaft erwiesen, wenn das Betätigungsmittel mit der Halteplatte derart gekoppelt ist, dass das Spannelement in der Spannkonfiguration radial durch den Spannkonus gespreizt ist. Somit ist der Spannkonus also vorgesehen, um das mit dem Werkzeug oder mit dem Werkstück wechselwirkende Spannelement radial aufzuweiten, und um dadurch eine Innenkontur zu spannen. Aufgrund des generativen Fertigungsverfahrens ist es möglich, jede komplexe Kontur herzustellen, wodurch das Spannelement an das zu ergreifende Werkstück oder Werkzeug exakt angepasst werden kann.

Das Spannelement ist gemäß einer bevorzugten Ausführungsform einstückig gebildet aus einem mit der Halteplatte verbundenen Koppelabschnitt, aus einem mit einem Innenkonus geformten Konusabschnitt sowie aus einem sich am Außenumfang verjüngenden Endabschnitt. Der Koppelabschnitt verbindet dabei die Halteplatte mit dem Spannelement und der Konusabschnitt ist derjenige Abschnitt des Spannelements, der mit dem Spannkonus des Betätigungsmittels wechselwirkt. Durch einen sich verjüngenden Endabschnitt ist das Einführen des Spannelements in eine Innenkontur eines zu ergreifenden Werkzeugs und/oder Werkstücks vereinfacht, da hierdurch eine Selbstausrichtung des Werkstücks erfolgt.

Weiterhin hat es sich als bevorzugt erwiesen, wenn das Spannelement außenumfangsseitig eine Nut aufweist, in der ein radial wirkendes Rückstellelement eingebracht oder angeordnet ist. In der Spannstellung ist der Spannkonus derart positioniert, dass dieser das Spannelement radial aufweitet. Wird das Betätigungsmittel zurück in die Lösestellung verstellt, so ist es erforderlich, auch das Spannelement in die Lösekonfiguration zu überführen, was durch das radial wirkende Rückstellelement zusätzlich gefördert wird. Somit ist also einerseits eine Rückstellkraft aufgrund des Materials des Spannelements vorhanden, welche andererseits durch die zusätzliche Rückstellkraft des radial wirkenden Rückstellelements unterstützt oder verstärkt wird. Dadurch lässt sich eine noch definiertere Verstellung des Spannelements bewirken.

Im Rahmen der Erfindung hat es sich als vorteilhaft erwiesen, wenn das Rückstellelement als ein O-Ring oder als eine Federschnur gebildet ist.

Um die Elastizität des Spannelements zu erhöhen, hat es sich als sinnvoll gezeigt, wenn in dem Spannelement radial orientierte Schlitze ausgebildet sind.

Aufgrund des im generativen Fertigungsverfahren hergestellten Spannelements integral mit der Halteplatte ist es auch möglich, die Halteplatte mit einer komplexen Struktur zu versehen, wobei es vorteilhaft ist, wenn der Halteplatte mindestens ein Führungsabschnitt zugeordnet ist. Somit erleichtert dies die Positionierung der Halteplatte und damit des Innengreifers an z.B. einem Roboterarm oder dergleichen.

Um die Halteplatte sicher mit dem Betätigungsmittel verbinden zu können, hat es sich im Rahmen der Erfindung ebenfalls als sinnvoll erwiesen, wenn sie mindestens eine Bohrung umfasst, in die ein Befestigungsmittel eingebracht ist zur Verbindung der Halteplatte mit dem Betätigungsmittel.

Im Folgenden wird die Erfindung an in den Zeichnungen dargestellten Ausführungsbeispielen näher erläutert; es zeigen:
- Fig. 1: einen Längsschnitt durch einen erfindungsgemäßen Innengreifer und
- Fig. 2: eine perspektivische Ansicht des Greifers aus Fig. 1.

In den Figuren ist ein Innengreifer 1 mit einem Betätigungsmittel 2 gezeigt. Dieses Betätigungsmittel 2 ist vorliegend als ein Fluid betätigter Spannzylinder gebildet, in dem ein Kolben 15 axial verstellbar geführt ist. An diesem Kolben 15 ist eine Zug- und/ oder Druckstange 16 angebracht, die ihrerseits mit dem Spannkonus 3 in Verbindung steht. Hierzu verfügt der Spannkonus 3 über einen Gewindeabschnitt mit einem Außengewinde, der in ein Innengewinde der Zugstange 16 eingedreht ist. Der Spannkonus 3 besitzt eine konus- bzw. kegelförmige Außenkontur, die im vorliegenden Ausführungsbeispiel auf der dem Betätigungsmittel 2 abgewandten Seite verjüngend gebildet ist. Mit anderen Worten weist der Spannkonus 3 einen Außenkonus 20 auf. Eine nicht näher dargestellte Ausführungsform eines Spannkonus 3 sieht vor, eine sich in Richtung des Betätigungsmittels 2 verjüngenden Außenkonus 20 einzusetzen, bei dem dann durch eine Zugbetätigung die Spannung des Werkstücks bewirkt wird. Durch das Betätigungsmittel 2 ist also der Spannkonus 3 axial verstellbar gelagert und kann ebenfalls zwischen einer Spannstellung und einer Lösestellung verstellt werden.

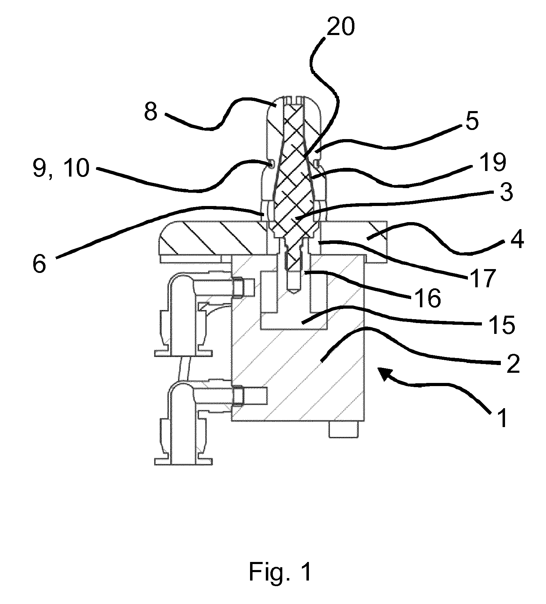

Weiterhin ist eine Halteplatte 4 vorgesehen, die einteilig mit einem Spannelement 5 gebildet ist. Hierzu weißt die Halteplatte 4 eine Durchführung 17 auf, durch die der Spannkonus 3 hindurchgeführt ist. Der Spannkonus 3 liegt an einer Innenwandung des Spannelements 5, insbesondere an einem Innenkonus 19 an und ist dazu ausgelegt, das Spannelement 5 aufzuweiten. Die Halteplatte 4 ist mit dem Betätigungsmittel 2 derart gekoppelt, dass das Spannelement 5 in der Spannkonfiguration radial durch den Spannkonus 3 gedehnt oder gespreizt ist. Hierzu wird die konusförmige Aussenkontur des Spannkonus 3 in Wechselwirkung gebracht mit einer im gezeigten Ausführungsbeispiel ebenfalls konusförmigen Innenkontur des Spannelements 5. Wird in der Ausführungsform gemäß Figur 1 der Kolben 15 axial in Richtung der Halteplatte 4 verstellt, so führt dies zu einer Aufweitung des Spannelements 5 durch den Spannkonus 3, wodurch ein Werkstück und/ oder ein Werkzeug innen ergriffen werden kann. Wird der Kolben 15 in die entgegengesetzte Richtung verstellt, so wird aufgrund der Materialelastizität des Spannelements 5 dieses wieder in die Ausgangsstellung gemäß Figur 1 verbracht. Um eine zusätzliche Rückstellung des Spannelements 5 in die Lösestellung gemäß Figur 1 auszuüben, hat das Spannelement 5 außenumfangsseitig eine Nut 9. In diese Nut 9 ist ein Rückstellelement 10 eingebracht, das radial auf das Spannelement 5 einwirkt. Dieses Rückstellelement 10 ist als ein O-Ring gebildet.

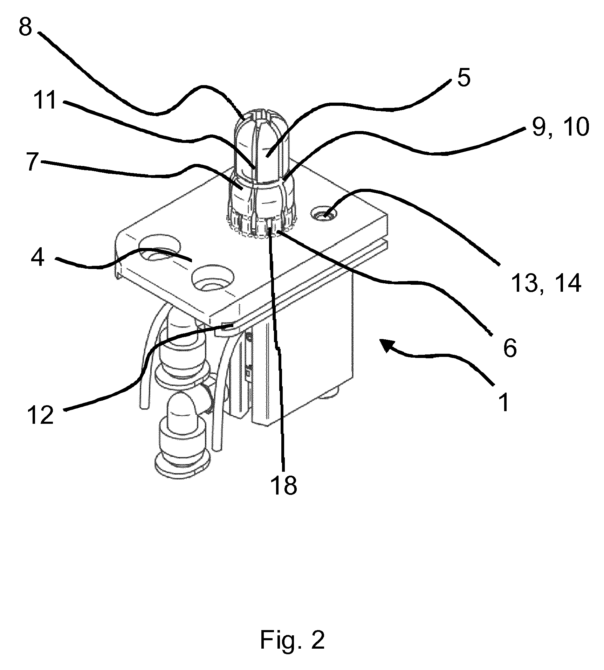

Wie sich insbesondere aus Figur 2 ergibt, ist das Spannelement 5 mit radial orientierten Schlitzen 11 geformt, wodurch die Elastizität des Spannelements 5 erhöht ist. Diese Schlitze 11 können auch mit einem Material, z. B. mit einem Elastomer gefüllt sein. Alternativ ist das Spannelement 5 auch geschlossen geformt. Wie sich aus Figur 2 weiterhin ergibt, gliedert sich das Spannelement 5 der gezeigten Erfindung in mehrere, vorliegend in genau drei Abschnitte, nämlich in einen mit der Halteplatte 4 verbundenen Koppelabschnitt 6, einen mit dem Innenkonus 19 geformten Konusabschnitt 7 sowie in einen sich am Aussenumfang verjüngenden Endabschnitt 8.

Wie sich aus Figur 2 ergibt, ist der Koppelabschnitt 6 mit zusätzlichen Ausnehmungen 18 geformt, wodurch dieser in einer besonderen bzw. alternativen Ausführungsform axial komprimierbar ausgeführt ist. Dies dient dem Lösen eines Werkstücks oder Werkzeugs. Wird der Spannkonus 3 axial in Richtung des Betätigungsmittels 2 verstellt, so nimmt dieser aufgrund der Reibung zwischen dem Innenkonus 19 und dem Außenkonus 20 das Spannelement 5 axial mit, wodurch der Koppelabschnitt 6 axial komprimiert wird. Dadurch gelangt das gespannte Werkstück stirnseitig zur Anlage mit der Fläche der Halteplatte 4 (sofern dies nicht bereits der Fall ist). Wird der Spannkonus 3 weiter verstellt, so nimmt dieser das Spannelement 5 durch die Komprimierung des Koppelabschnitts 6 weiterhin mit, wodurch das Werkstück (stirnseitige) durch die Halteplatte 4 vom Spannkonus 3 weggedrückt wird. Das Werkstück wird somit auf einfache Weise gelöst. Letztlich weist die Halteplatte 4 selbst Führungsabschnitte 12 auf, wodurch sie einfach an die gewünschte Vorrichtung (z. B. an einen Roboterarm) angebracht werden kann. Ferner ist zur Verbindung der Halteplatte 4 mit dem Bestätigungsmittel 2 diese mit Bohrungen 13 ausgeführt, in die ein Befestigungsmittel 14 eingebracht ist.

Im Ergebnis zeichnet sich der vorliegende Innengreifer 1 durch seine Kompaktheit aus und unterliegt bei seiner Herstellung nur geringen Durchlaufzeiten, da die Halteplatte 4 und das Spannelement 5 einstückig in einem Fertigungschritt hergestellt werden.

### Bezugszeichenliste

- 1: Innengreifer
- 2: Betätigungsmittel
- 3: Spannkonus
- 4: Halteplatte
- 5: Spannelement
- 6: Koppelabschnitt
- 7: Konusabschnitt
- 8: Endabschnitt
- 9: Nut
- 10: Rückstellelement
- 11: Schlitz
- 12: Führungsabschnitt
- 13: Bohrung
- 14: Befestigungsmittel
- 15: Kolben
- 16: Zug- und/oder Durckstange
- 17: Durchführung
- 18: Ausnehmung
- 19: Innenkonus
- 20: Außenkonus

## Patentansprüche

1. Innengreifer (1) mit einem Betätigungsmittel (2), das zumindest zwischen einer Spannstellung und einer Lösestellung verstellbar ist und dem ein axial verstellbarer Spannkonus (3) zugeordnet ist, der in ein mit einer Halteplatte (4) einteilig ausgebildetes sowie mit einem Werkzeug und/oder einem Werkstück wechselwirkendes Spannelement (5) eingreift.

2. Innengreifer (1) nach Anspruch 1, **dadurch gekennzeichnet, dass** das Betätigungsmittel (2) mit der Halteplatte (4) derart gekoppelt ist, dass das Spannelement (5) in der Spannkonfiguration radial durch den Spannkonus (3) gespreizt ist.

3. Innengreifer (1) nach Anspruch 1 oder 2, **dadurch gekennzeichnet, dass** das Spannelement (5) einstückig gebildet ist aus einem mit der Halteplatte (4) verbundenen Koppelabschnitt (6), einem mit einem Innenkonus (19) geformten Konusabschnitt (7), sowie einem sich am Außenumfang verjüngenden Endabschnitt (8).

4. Innengreifer (1) nach einem der Ansprüche 1 bis 3, **dadurch gekennzeichnet, dass** das Spannelement (5) außenumfangsseitig eine Nut (9) aufweist, in der ein radial wirkendes Rückstellement (10) eingebracht oder angeordnet ist.

5. Innengreifer (1) nach Anspruch 4, **dadurch gekennzeichnet, dass** das Rückstellelement (10) als ein O-Ring oder als eine Federschnur gebildet ist.

6. Innengreifer (1) nach einem der Ansprüche 1 bis 5, **dadurch gekennzeichnet, dass** in dem Spannelement (5) radial orientierte Schlitze (11) ausgebildet sind.

7. Innengreifer (1) nach einem der Ansprüche 1 bis 6, **dadurch gekennzeichnet, dass** die Halteplatte (4) mindestens einen Führungsabschnitt (12) umfasst.

8. Innengreifer (1) nach einem der Ansprüche 1 bis 7, **dadurch gekennzeichnet, dass** die Halteplatte (4) mindestens eine Bohrung (13) umfasst, in die ein Befestigungsmittel (14) eingebracht ist zur Verbindung der Halteplatte (4) mit dem Betätigungsmittel (2).
